**Europäisches Patentamt**

**European Patent Office**

**Office européen des brevets**

(19)

(11) Veröffentlichungsnummer: **0 286 826 B1**

(12) # EUROPÄISCHE PATENTSCHRIFT

(45) Veröffentlichungstag der Patentschrift:
24.07.91 Patentblatt 91/30

(51) Int. Cl.⁵ : **A01D 43/10**

(21) Anmeldenummer: **88103588.5**

(22) Anmeldetag: **08.03.88**

(54) **Mähwerk mit Walzen-Aufbereiter.**

(30) Priorität: **02.04.87 DE 3711047**

(43) Veröffentlichungstag der Anmeldung:
**19.10.88 Patentblatt 88/42**

(45) Bekanntmachung des Hinweises auf die
Patenterteilung:
**24.07.91 Patentblatt 91/30**

(84) Benannte Vertragsstaaten:
**CH DE FR GB IT LI NL**

(56) Entgegenhaltungen:
**CH-A- 641 928**
**DD-A- 152 893**
**DE-A- 2 459 007**
**GB-A- 2 130 864**

(73) Patentinhaber: **CLAAS SAULGAU GMBH**
**Postfach 29**
**W-7968 Saulgau (DE)**

(72) Erfinder: **Schulz, Wilfried**
**Prälat-Hufnagel-Strasse 17/1**
**W-7968 Saulgau (DE)**
Erfinder: **Behrendt, Robert**
**Am Feldrain 3**
**W-7968 Saulgau-Bogenweiler (DE)**

**Beschreibung**

Die Erfindung bezieht sich auf ein Mähwerk mit Walzenaufbereiter nach den Merkmalen des Oberbegriffes des Hauptanspruches. Mähwerke dieser Art sind zum Beispiel in der DE-A-26 07 666 dargestellt.

Der Aufbereiter dient dazu, Erntegut, das von dem Mähwerk geschnitten wurde, beim Durchgang durch die Preßwalzen so zu quetschen, daß eine nachfolgende Trocknung erleichtert wird. Wenn das Erntegut aber zur direkten Verfütterung verwendet soll, ist seine Aufbereitung unerwünscht. Bei zahlreichen bekannt gewordenen Mähwerken ist deshalb vorgesehen, den Aufbereiter leicht abbaubar zu machen oder ihn — wie bei der oben genannten Druckschrift — in eine Stellung zu verschwenken, in der er das gemähte Erntegut nicht mehr erfaßt. Diese Maßnahme ist aber, vor allem wegen der stets vorhandenen Schutzverdecke, nur mühsam und mit großem konstruktiven Aufwand durchzuführen.

Die Erfindung löst die Aufgabe, den Aufbereiter mit geringem Aufwand so zu verändern, daß das Mähgut nicht gequetscht wird und daß darüberhinaus das abfließende Mähgut noch gelockert werden kann. Erfindungsgemäß wird das dadurch erreicht, daß die unteren Preßwalzen in zwei Drehrichtungen angetrieben werden können. Dabei ist erfindungsgemäß vorgesehen, daß die unteren Preßwalzen für die beiden Drehrichtungen mit verschiedenen Drehgeschwindigkeiten angetrieben werden können. Weiterhin ist vorgesehen, daß die oberen Preßwalzen, von ihrem Antrieb abgeschaltet, frei drehbar umlaufen können. Um eine Drehrichtungsumkehr für die unteren Preßwalzen auf möglichst einfache Weise zu erzielen, wird vorgeschlagen, daß die unteren Preßwalzen von der für den Antrieb der oberen Preßwalzen vorgesehenen Stelle des Verteilergetriebes aus angetrieben werden können.

An Hand zweier Abbildungen wird eine Ausführung eines Mähwerkes nach der Erfindung beispielsweise dargestellt.

Fig. 1    zeigt ein Mähwerk mit Walzenaufbereiter nach der Erfindung schematisch in einer Seitenansicht

Fig. 2    den gleichen Gegenstand in einer Ansicht von hinten.

An einem Maschinenrahmen 1 sind zwei Mähtrommeln 2 um senkrechte Achsen drehbar gelagert. Sie werden durch nicht dargestellte Getriebe in gegenläufige Umdrehungen versetzt. Durch an den Trommeln befestigte Mähmesser 3 wird das Mähgut abgeschnitten und zwischen den beiden Trommeln nach hinten befördert. In Fahrtrichtung hinter den Mähtrommeln 2 ist eine untere Preßwalze 4 quer zur Fahrtrichtung um eine Achse 5 drehbar gelagert. An Schwingen 6, die an dem Maschinenrahmen 1 angelenkt sind, ist eine obere Preßwalze 7 höhenbeweglich und um eine Querachse 8 drehbar gelagert. Die Preßwalze 7 kann mittels nicht dargestellter Hilfsmittel, zum Beispiel Federn nach unten gegen einen Anschlag der unteren Preßwalze 4 zu angedrückt werden. Über den Preßwalzen 4, 7 befindet sich ein Schutzverdeck 9.

An den Maschinenrahmen 1 ist ein Verteilergetriebe 10 angeflanscht, das Wellenstummel 11 und 12 besitzt. An diese Wellenstummel 11, 12 können Gelenkwellen 13, 14 angeschlossen werden, von denen die obere Gelenkwelle 13 zum Beispiel die obere Preßwalze 7 und die untere Gelenkwelle 14 die untere Preßwalze 4 antreiben kann. Es ist aber auch möglich, die obere Gelenkwelle 13 mit der unteren Preßwalze zu verbinden und die untere Gelenkwelle 14 in eine nicht näher dargestellte Ruhestellung zu verbringen. Desgleichen ist es möglich, das Verteilergetriebe 10 mit einem an sich bekannten Zweiganggetriebe auszurüsten, so daß zum Beispiel die untere Preßwalze 4 mit verschiedenen Drehgeschwindigkeiten angetrieben werden kann.

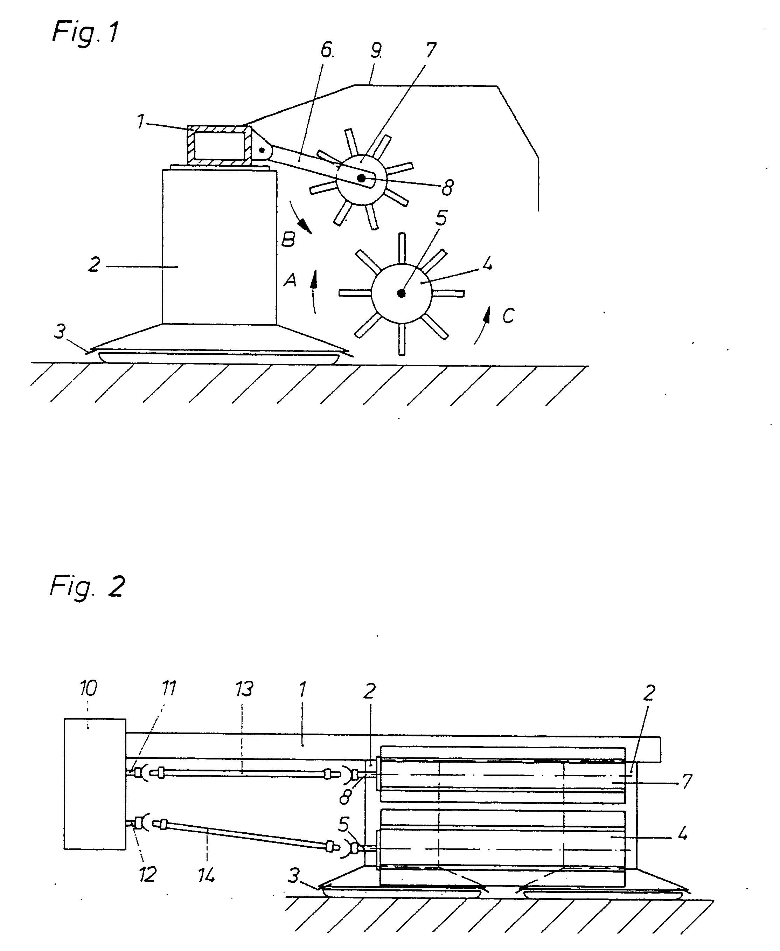

Beim Betrieb des Mähwerkes wird das Mähgut von den Mähtrommeln 2 abgeschnitten und zwischen beiden Trommel nach hinten geführt. Wenn das Mähgut aufbereitet werden soll, wird der Walzen-Aufbereiter so verwendet, wie in Fig. 2 dargestellt. Die obere Preßwalze 7 wird im Sinne des Pfeiles B (Fig. 1) angetrieben, die untere Preßwalze 4 im Sinne des Pfeiles A. Das Mähgut wird dadurch zwischen den beiden Preßwalzen durchgeführt und durch Schlag, Knickung oder Pressung so beschädigt, daß die in der Pflanze enthaltene Flüssigkeit leichter verdunsten kann. Nach dem Durchgang durch die Preßwalzen 4, 7 wird das Mähgut locker auf den Boden abgelegt.

Wenn das Mähgut nicht aufbereitet werden soll, wird die untere Gelenkwelle 14 vom dem Antriebsstummel der unteren Preßwalze 4 abgenommen und in eine Ruhestellung verbracht. Die obere Gelenkwelle 13 wird von dem Antriebsstummel der oberen Preßwalze 7 abgenommen und auf den Antriebsstummel der unteren Preßwalze 4 aufgesteckt. Dadurch wird diese im Sinne des Pfeiles C angetrieben, während die obere Preßwalze 7 stehen oder sich frei drehen kann. Das Mähgut wird dann unterhalb der unteren Preßwalze durchgeführt und hinter ihr auf den Boden abgelegt und leicht gelockert. Durch Wahl einer geeigneten Drehgeschwindigkeit kann der Lockerungseffekt in der gewünschten Stärke eingestellt werden.

## Patentansprüche

1. Mähwerk mit mindestens einem Paar übereinander angeordneter, nachgeschalteter Preßwalzen, die von einem Verteilergetriebe über Gelenkwellen oder dergleichen gegenläufig angetrieben werden können, dadurch gekennzeichnet, daß die untere bzw. die unteren Preßwalzen (4) in zwei Drehrichtungen (A, C) angetrieben werden können.

2. Mähwerk nach Anspruch 1, dadurch gekennzeichnet, daß die untere bzw. die unteren Preßwalzen (4) für die beiden Drehrichtungen (A, C) mit verschiedenen Drehgeschwindigkeiten angetrieben werden können.

3. Mähwerk nach den Ansprüchen 1 und 2, dadurch gekennzeichnet, daß die obere bzw. die oberen Preßwalzen (7), vom Antrieb abgeschaltet, frei drehbar umlaufen können.

4. Mähwerk nach Anspruch 3, dadurch gekennzeichnet, daß die untere bzw. die unteren Preßwalzen (4) von der für den Antrieb der oberen Preßwalze bzw. Preßwalzen (7) vorgesehenen Stelle (11) des Verteilergetriebes (10) aus angetrieben werden können.

## Claims

1. A mowing mechanism comprising at least one pair of downstream-disposed pressing rollers which are arranged one above the other and which can be driven in opposite relationship by a distributor transmission by way of cardan shafts or the like characterised in that the lower pressing roller or rollers (4) can be driven in two directions of rotation (A, C).

2. A mowing mechanism according to claim 1 characterised in that the lower pressing roller or rollers (4) can be driven at different speeds of rotation for the two directions of rotation (A, C).

3. A mowing mechanism according to claims 1 and 2 characterised in that the upper pressing roller or rollers (7), disconnected from the drive, can freely rotatably revolve.

4. A mowing mechanism according to claim 3 characterised in that the lower pressing roller or rollers (4) can be driven from the location (11) of the distributor transmission (10), which is provided for the drive for the upper pressing roller or rollers (7).

## Revendications

1. Mécanisme de fauchage comprenant au moins une paire de rouleaux presseurs montés à la suite et disposés l'un au-dessus de l'autre, qui peuvent être entraînés en sens contraires par un mécanisme distributeur par l'intermédiaire d'arbres de transmission articulés ou analogues, caractérisé en ce que le ou les rouleaux presseurs inférieurs (4) peut ou peuvent être entraînés dans les deux sens de rotation (A, C).

2. Mécanisme de fauchage selon la revendication 1, caractérisé en ce que le ou les rouleaux presseurs inférieurs (4) peuvent être entraînés dans les deux sens de rotation (A, C) à des vitesses différentes.

3. Mécanisme de fauchage selon les revendications 1 et 2, caractérisé en ce que le ou les rouleaux presseurs supérieurs (7) peuvent être déconnectés du mécanisme d'entraînement et tourner librement.

4. Mécanisme de fauchage selon la revendication 3, caractérisé en ce que le ou les rouleaux presseurs inférieurs (4) peuvent être entraînés à partir de la position (11) du mécanisme distributeur (10) prévue pour l'entraînement du ou des rouleaux presseurs supérieurs (7).

**Fig. 1**

**Fig. 2**